# EUROPEAN PATENT SPECIFICATION

(11) **EP 1 724 965 B1**
(45) Date of publication and mention of the grant of the patent: **09.09.2009**
(21) Application number: 05714779.5
(22) Date of filing: 28.02.2005
(51) Int. Cl.: H04L 12/00

(54) **A method for clearing the network resource occupied by the user in the wireless local area network**
Verfahren zur Freistellung von Netzressourcen, die vom Nutzer im WLAN besetzt sind
Procédé de libération d'une ressource reseau occupée par l'utilisateur dans un réseau local sans fil

(30) Priority: 14.04.2004 CN 200410034466
(43) Date of publication of application: 22.11.2006
(73) Proprietor: Huawei Technologies Co., Ltd., Longgang District, Shenzhen, Guangdong Province 518129 (CN)
(72) Inventor: ZHANG, Wenlin, Huawei Administration Building, Shenzhen, Guangdong 518129 (CN)
(74) Representative: Manitz, Finsterwald & Partner GbR
(86) International application number: PCT/CN2005/000248
(87) International publication number: WO 2005/101729

(56) References cited:
- WO-A2-98/21910
- JP-A- 10 336 736
- KR-A- 2001 011 089
- 3GPP: "3rd Generation Partnership Project; Technical Specification Group Services and System Aspects; 3GPP system to Wireless Local Area Network (WLAN) Interworking; System Description (Release 6)" 3GPP TS 23.234 V2.5.0 (2004-03), no. 3GPP23.234, 31 March 2004 (2004-03-31), pages 1-90, XP002432690 France
- AHMAVAARA K ET AL: "Interworking Architecture Between 3GPP and WLAN Systems" November 2003 (2003-11), IEEE COMMUNICATIONS MAGAZINE, IEEE SERVICE CENTER, PISCATAWAY, US, PAGE(S) 74-81 , XP002264845 ISSN: 0163-6804 * the whole document *

## Description

### Field of the Invention

The present invention generally relates to network resource management technology, more particularly to a method for releasing the network resources occupied by a subscriber in a Wireless Local Area Network (WLAN).

### Background of the Invention

With the increasing demand for high rate of wireless access, there emerges WLAN, which is able to provide high-rate wireless data access in a relatively small area. Various techniques have been used in WLAN, among which a technical standard with wide applications is IEEE 802.11b. This standard utilizes the frequency band of 2.4GHz with a data transmission rate up to 11 Mbps. Other technical standards utilizing the same frequency band include IEEE 802.11g and Bluetooth, wherein the data transmission rate of IEEE 802.11g is up to 54Mbps. There are other new standards such as IEEE 802.11 a and ETSI BRAN Hiperlan2 which utilize the frequency band of 5GHz with a transmission rate of up to 54 Mbps.

Although there are various techniques for wireless access, WLAN is mostly used to transmit IP data packets. For a wireless IP network, the specific WLAN access standard adopted is usually transparent to the upper-level IP. Such a network is typically configured with Access Points (AP) for the user terminal to implement wireless access and with network controlling and connecting devices to implement IP transmission.

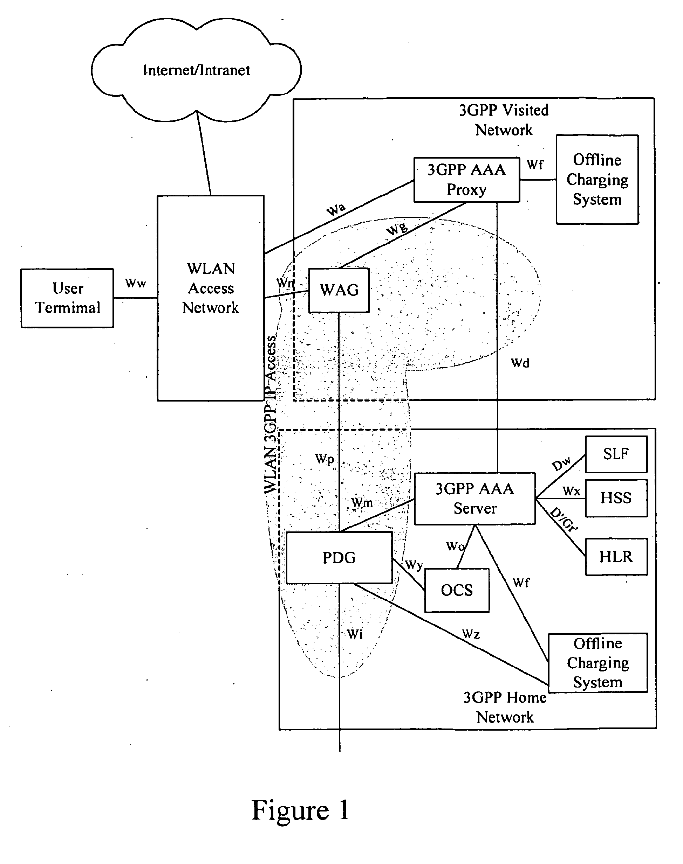

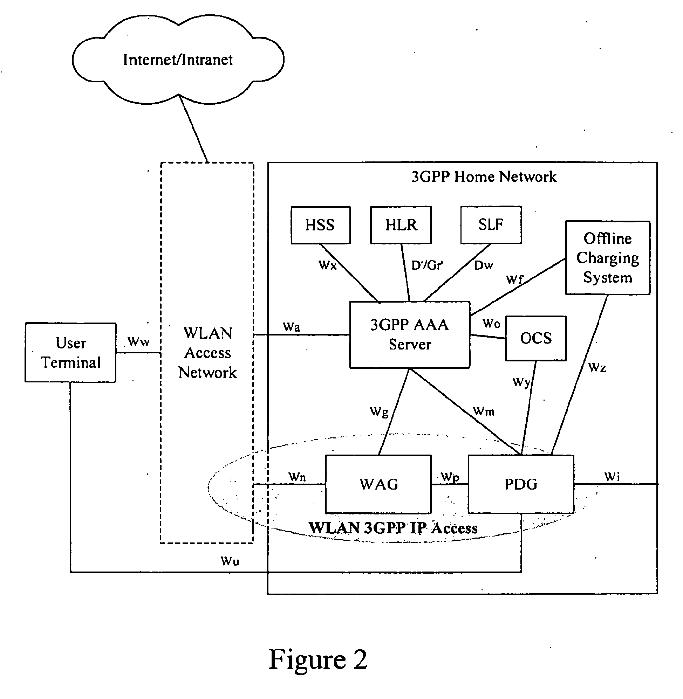

Along with the emergence and development of WLAN, the research focus is shifting to the inter-working of WLAN with various mobile communication networks, such as GSM, CDMA, WCDMA, TD-SCDMA and CDMA2000. According to the 3GPP standard, the user terminal is able to connect with Internet and Intranet as well as the home network or visited network of 3GPP system through the WLAN access network. To be specific, for local access, the WLAN user terminal will connect with the 3GPP home network through the WLAN access network, as shown in Figure 2. For roaming access, the WLAN access network will connect with the 3GPP visited network through the WLAN access network. Some entities of 3GPP visited network are connected with corresponding entities of 3GPP home network, for instance, the 3GPP Authentication, Authorization, Accounting (AAA) proxy in the visited network is connected with the 3GPP AAA server in the home network, the WLAN Access Gateway (WAG) in the visited network is connected with the Packet Data Gateway (PDG) in the home network, as shown in Figure 1. Figure1 and Figure 2 are the schematic diagrams illustrating the networking architectures of WLAN inter-working with 3GPP system under roaming and non-roaming circumstances, respectively.

As shown in Figure 1 and Figure 2, a 3GPP system primarily comprises Home Subscriber Server (HSS)/ Home Location Register (HLR), 3GPP AAA server, 3GPP AAA proxy, WAG, PDG, Charging Gateway (CGw)/Charging information Collecting Function (CCF), the Offline charging system and the Online Charging System (OCS). The user terminal, WLAN access network and together with all the entities in the 3GPP system constitute a 3GPP-WLAN inter-working network, which can be regarded as a WLAN service system. In this service system, 3GPP AAA server is in charge of authentication, authorization, and charging for the user terminal, collecting the charging information sent from the WLAN access network and transmitting the information to the charging system; PDG is in charge of transmission of subscriber data from the WLAN access network to the 3GPP network or other packet data networks; the charging system mainly receives and records the charging information of the user terminal transmitted from the network while OCS indicates the network to transmit online charging information periodically according to the expenses of the online charged subscribers, creates statistics and manages control.

Under non-roaming circumstances, when a WLAN user terminal wants to directly access the Internet/Intranet, it can access the Internet/Intranet via a WLAN access network after it accomplishes authentication with the AAA server (AS) via the WLAN access network. If the WLAN user terminal also wants to access the service of 3GPP packet switched (PS) domain, it should further apply for the service of Scenario 3 from the 3GPP home network. That is, the WLAN user terminal initiates a service authorization request for Scenario 3 to the AS of the 3GPP home network, which will carry out service authentication and authorization for this request; if the authentication and authorization succeed, AS will send an access accept message to the user terminal and assign a corresponding PDG for the user terminal. When a tunnel is established between the user terminal and the assigned PDG, the user terminal will be able to access the service of 3GPP PS domain. Meanwhile, the offline charging system and OCS record the user terminal's charging information according to its occupation of the network.

Under roaming circumstances, when a WLAN user terminal wants to access directly to the Internet/Intranet, it can make a request for access the Internet/Intranet via the 3GPP visited network to the 3GPP home network. If the user terminal also wants to apply for the service of Scenario 3 to access the service of the 3GPP PS domain, it needs to further initiate a service authorization process via the 3GPP visited network to the 3GPP home network. The authorization process is also carried out between the user terminal and the AS of the 3GPP home network. After the authorization succeeds, AS will assign the corresponding home PDG for the user terminal. When the user terminal establishes a tunnel with the assigned PDG via the WAG of the 3GPP visited network, it will be able to access the service of 3GPP PS domain of the home network.

At present for the WLAN network, the international technical specifications or standards have specified the procedure to establish the service tunnel between the user terminal and PDG (see 3GPP standard TS 23.234 version 2.5.0) ; but when the basic connection for the user terminal is disconnected, there is no appropriate procedure to ensure that the information related to the service tunnel is released in time. That is, after the service connection is disconnected, there is no proposed solution to release the related network resources occupied by the disconnected service tunnel. Wherein, the WLAN basic connection means the connection between the WLAN access network and the WLAN UE. With this basic connection, the WLAN UE can access the network resources within or connected to the PDG.

### Summary of the Invention

The present invention is to provide a method for releasing the network resources occupied by the subscriber in WLAN, ensuring that the network resources occupied by the disconnected service tunnel for the subscriber in WLAN can be completely released in time.

Accordingly, a method for releasing network resources occupied by the subscriber in 3GPP-WLAN inter-working network is provided. The method includes:
a service authentication and/or authorization module initiates an indication to release the service tunnel related resources to a PDG corresponding to the service tunnel connection to be disconnected;
upon reception of the indication to release the service tunnel related resources, the PDG releases related resources of the tunnel to be disconnected.

The method may further include: after the service authentication and/or authorization module receives disconnection information from a network node or decides to disconnect the connection related to the subscriber according to the changes of stored information, if there exist the service tunnel related resources to be released which are related to a service tunnel connection corresponding to a conversation connection to be disconnected or has been disconnected, determining the PDG corresponding to the service tunnel connection and initiating an indication to release the service tunnel related resources to the determined PDG..

### For the above scheme, the method may further include four situations:

**Case One.** The network node may be a WLAN access network, before receiving the disconnection information, the method may further include:
the WLAN access network initiating a session termination procedure for the specified subscriber to the service authentication and/or authorization module directly or through a service authentication and/or authorization proxy module;
if the service authentication and/or authorization module decides to release the service tunnel related resources and information related to the specified subscriber according to the stored subscriber status information and subscriber subscription information, continuing with the subsequent steps; otherwise, terminating the procedure.

**Case Two.** The network node may be a WAG, before receiving the disconnection information, the method may further include:
the WAG initiating a session termination procedure for the specified subscriber to the service authentication and/or authorization module directly or through a service authentication and/or authorization proxy module;
the service authentication and/or authorization module terminating the connection of the specified subscriber through the WAG, if the service authentication and/or authorization module decides not to disconnect the WLAN conversation connection according to the stored present subscriber status information and subscriber subscription information, terminating the procedure; if the service authentication and/or authorization module decides to disconnect the WLAN conversation connection according to the stored present subscriber status information and subscriber subscription information, initiating the session termination procedure for the specified subscriber to the WLAN access network, indicating the disconnection of the radio connection for the specified subscriber, and if it is needed to release the service tunnel related resources and information related to the specified subscriber according to the stored present subscriber status information and subscription information, continuing with the subsequent steps; otherwise, terminating the procedure.

**Case Three.** The network node may be an OCS, before receiving the disconnection information, the method may further include:
the service authentication and/or authorization module sending charging credit application to the OCS and the OCS rejecting the application;
if the service authentication and/or authorization module decides to initiate a session termination procedure for the specified subscriber to the WLAN access network according to the rejection information and the set processing rules for the rejection, initiating a session termination procedure for the specified subscriber and indicating the disconnection of the radio connection for the specified subscriber; otherwise, executing the corresponding processing.

**Case Four.** The network node may be an HSS/HLR, before receiving the disconnection information, the method may further include:
the HSS/HLR initiating a deregistration procedure for the specified subscriber to the service authentication and/or authorization module after the subscriber subscription information is cancelled;
the service authentication and/or authorization module initiating a session termination procedure for the specified subscriber to the WLAN access network and indicating to disconnect the radio connection for the specified subscriber.

The above method may further include: the PDG sending a tunnel disconnection report to the service authentication and/or authorization module, the service authentication and/or authorization module refreshing its information related to the disconnected service tunnel connection after receiving the tunnel disconnection report. Wherein, the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases its related service tunnel related resources first that need not be sent to the service authentication and/or authorization module and then releases the remaining service tunnel related resources after receiving an acknowledgement message for the tunnel disconnection report from the service authentication and/or authorization module.

The method may further include: the service authentication and/or authorization module initiating a purging procedure to the HSS/HLR to remove the subscriber information after receiving the tunnel disconnection report.

The above method may further include: the PDG sending the tunnel disconnection report to the service authentication and/or authorization module, the service authentication and/or authorization module refreshing its information related to the disconnected service tunnel connection after receiving the tunnel disconnection report. Wherein the PDG releasing its related service tunnel related resources before sending the tunnel disconnection report to the service authentication and/or authorization module, or sending the tunnel disconnection report first and then releasing its related service tunnel related resources after receiving an acknowledgement message for the tunnel disconnection report from the service authentication and/or authorization module, or releasing its related service tunnel related resources first that need not be sent to the service authentication and/or authorization module and then releasing the remaining service tunnel related resources after receiving an acknowledgement message for the tunnel disconnection report from the service authentication and/or authorization module.

The above method may further include: if there exist filtering rules or filtering information corresponding to the present disconnected service tunnel connection in the WAG, sending an indication to remove the filtering rules or filtering information to the WAG, the WAG removing its corresponding filtering rules or filtering information after receiving the indication.
wherein the sending an indication to remove the filtering rules or filtering information to the WAG is: sending an indication to remove the filtering rules or filtering information to the WAG by the PDG corresponding to the present disconnected service tunnel connection directly or by the service authentication and/or authorization module.

After the WAG removing its corresponding filtering rules or filtering information, the method may further include: the PDG sending the tunnel disconnection report to the service authentication and/or authorization module, the service authentication and/or authorization module refreshing its information related to the disconnected service tunnel connection after receiving the tunnel disconnection report. Wherein the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases its related service tunnel related resources first that need not be sent to the service authentication and/or authorization module and then releases the remaining service tunnel related resources after receiving an acknowledgement message for the tunnel disconnection report from the service authentication and/or authorization module.

The method may further include: the service authentication and/or authorization module initiating a purging procedure to the HSS/HLR to remove the subscriber information after receiving the tunnel disconnection report.

The method may further include: if there exist filtering rules or filtering information corresponding to the present disconnected service tunnel connection in the WAG, sending an indication to remove the filtering rules or filtering information to the WAG, the WAG removing its corresponding filtering rules or filtering information after receiving the indication; otherwise, no processing being made. wherein the sending indication to remove the filtering rules or filtering information to the WAG is: sending an indication to remove the filtering rules or filtering information to the WAG by the PDG corresponding to the present disconnected service tunnel connection directly or by the service authentication and/or authorization module.
Wherein after the WAG removing its corresponding filtering rules or filtering information, the method may further include: the PDG sending a tunnel disconnection report to the service authentication and/or authorization module, the service authentication and/or authorization module refreshing its information related to the disconnected service tunnel connection after receiving the tunnel disconnection report.
wherein the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases first its related service tunnel related resources that need not be sent to the service authentication and/or authorization module and then releases the remaining service tunnel related resources after receiving an acknowledgement message for the tunnel disconnection report from the service authentication and/or authorization module.

The method may further include: if it is needed to release the service tunnel related resources of all the service tunnel connections for the present subscriber, the PDG removing all the stored authorization information corresponding to the present subscriber when releasing the related service tunnel related resources of the present disconnected service tunnel connections. In this case, the method may further include: if the basic connection for the present subscriber needs to be disconnected immediately, or the subscriber has been offline, or the subscriber has been or will be immediately disconnected completely with the service authentication and/or authorization module for control, the service authentication and/or authorization module initiating to the PDG to release all the service tunnel related resources related to the subscriber

In the above method, the service tunnel related resources may include: the tunnel ID of the disconnected service tunnel, the encrypted key for communication of the disconnected service tunnel, the subscriber's service authorization information related to the disconnected service tunnel, the control information and status information related to the maintenance of the disconnected service tunnel, the subscriber subscription information related to the service tunnel connection.

In the above method, the service authentication and/or authorization module may be a 3GPP AAA server, or a AAA proxy.

In the method for releasing network resources occupied by subscriber in WLAN, when a network node finds that a subscriber connection needs to be released, it will interact with the service authentication and/or authorization module, such as AAA server, to release this connection. Meanwhile, the service authentication and/or authorization module, such as AAA server, determines on which node there are occupied network resources to be released and then interacts with the determined node to complete the release procedure of the occupied resources. In this way, it ensures that all the network resources occupied by the subscriber corresponding to the present released connection can be released in time and completely when the connection release is made under different circumstances or initiated by different network node, thus may reduce the occupation of redundant information and resources in the network entities and increasing the network resource efficiency.

The invention is related to, but not limited to, the inter-working with the networks of GSM, CDMA, WCDMA, TD-SCDMA or CDMA2000.

### Brief Description of the Drawings

Figure 1 is a network schematic diagram illustrating the inter-working between WLAN system and 3GPP system in the roaming case.
Figure 2 is a network schematic diagram illustrating the inter-working between WLAN system and 3GPP system in the non-roaming case.
Figure 3 is a flowchart illustrating the procedure to release service tunnel related resources.
Figure 4 is a flowchart illustrating the procedure to release network resources when a disconnection procedure is initiated by the WLAN.
Figure 5 is a flowchart illustrating a procedure to release network resources when a disconnection procedure is initiated by the WAG.
Figure 6 is a flowchart illustrating a procedure to release network resources when a disconnection procedure is initiated by the OCS.
Figure 7 is a flowchart illustrating a procedure to release network resources when a disconnection procedure is initiated by an HSS/HLR.

### Embodiments of the Invention

Generally, when finding that it needs to disconnect a subscriber's connection, a network node initiates a disconnection procedure and interacts with a service authentication and/or authorization module to complete the disconnection procedure. The service authentication and/or authorization module determines whether to release the network resources and information related to the disconnected service tunnel in other related nodes, if yes, the service authentication and/or authorization module interacts with the determined nodes to complete the release of network resources. Wherein, the network node initiating the disconnection procedure could be the user terminal, a WLAN access network, a WAG, a PDG, an OCS or an HSS/HLR. The service authentication and/or authorization module could be an AAA server.

In a WLAN-3GPP inter-working network, the subscriber's connections may be of different levels. The first-level connection is the WLAN radio connection, which is the basic connection for ensuring signaling interaction between the subscriber and the WLAN access network. The subscriber can access the network resources of the WLAN access network only after being authorized and the subscriber generally can have only one radio connection in a WLAN network.

The second-level connection is the conversation connection established after the subscriber access is authenticated and authorized. The conversation connection indicates that the subscriber is authenticated and authorized by the Visited Public Land Mobile Network (VPLMN) and can access the network resources through some ports provided by the WLAN. The conversation connection also indicates the management of authentication and authorization for the subscriber. For instance, when the subscriber chooses the VPLMN1 in WLAN network, the subscriber is authenticated, authorized and managed by the WLAN-VPLMN1-HPLMN connection system. In this case, if the subscriber is allowed to access the Public Land Mobile Network (PLMN), the subscriber could access the related resources of Home Public Land Mobile Network (HPLMN) only through the VPLMN1, or could access the related resources of the VPLMN1 directly. If the subscriber is allowed to establish more conversation connections at the same time, the subscriber could have the WLAN-VPLMN1-HPLMN connection, the WLAN-VPLMN2-HPLMN connection, ... the WLAN-VPLMNn-HPLMN connection, simultaneously.

The third-level connection is the subscriber-based WLAN conversation connection. If the subscriber wants to access the PLMN resources, a service tunnel connection could be further established for network resource access. For instance, if the subscriber wants to access the W-APNa identified service in the HPLMN, a service tunnel should be established with the corresponding PDG that provides the service.

Therefore, it should be considered carefully when a disconnection procedure is to be performed. If a radio connection disappears, the WLAN needs to initiate a procedure to disconnect the conversation connections based on the radio connection; and when a conversation connection is disconnected, the service authentication and/or authorization module, such as AAA server, needs to determine whether there is a related service tunnel connection on the PDG, if yes, release the related service tunnel related resources.

For a user terminal, only one radio connection can be established while more conversation connections could be established on this radio connection simultaneously, for example, the WLAN-VPLMN1-HPLMN, WLAN-VPLMN2-HPLMN, ... WLAN-VPLMNn-HPLMN, etc.

In addition, on a conversation connection, a subscriber could establish more service connections to one PDG or to different PDGs. In the case of more conversation connections, it should be noted that when the WLAN access network disconnects only one conversation connection, such as the one through the VPLMN1, the service authentication and/or authorization module, such as the AAA server, will determine whether to disconnect only the service connections on the conversation connection and determine which VPLMN the WAG belongs to, through which the related service tunnel is established to the PDG.

When a radio connection disappears or will be disconnected immediately, the WLAN or the service authentication and/or authorization module, such as the AAA server, could initiate to disconnect all conversation connections and all service tunnel connections at one time without checking the connections one by one.

Generally, after receiving a disconnection indication initiated by a network node, the service authentication and/or authorization module indicates the PDG to release related occupied resources. When receiving the indication to release related occupied resources, the PDG determines whether it is indicated to disconnect all connections for the subscriber; if yes, the related network resources occupied by the disconnected service tunnel are released directly. During the release process, if it is found that when the related service tunnel related resources were established there were filtering rules set in the WAG equipments or the service authentication and/or authorization module sent related filtering information to the WAG, and the filtering rules or filtering information need to be removed, then a procedure to remove the related filtering rules or filtering information set in the WAG is initiated. When the release of all the resources in related nodes is finished, the service authentication and/or authorization module refreshes its status information and further interacts with the HSS/HLR if necessary to completely remove the subscriber information stored in the present service authentication and/or authorization module, such as AAA server, according to the method specified in the present subscriber information purging procedure. Wherein, the interaction with the HSS/HLR if necessary, means to remove the usage information in the service authentication and/or authorization module, such as AAA server, of the subscriber subscription information stored in the HSS/HLR.

When the service tunnel connection is established, the PDG will send the filtering rules to the WAG simultaneously as it is setting its filtering rules. Therefore, if the PDG finds there are filtering rules stored inside, there must be corresponding filtering rules set in the WAG. In addition, if the service authentication and/or authorization module has sent filtering information to the WAG, there should be corresponding filtering information recorded in the service authentication and/or authorization module. Wherein, the filtering rules or filtering information could be: the tunnel numbers, with which the data is allowed by the PDG to get through.

The related network resources occupied by the disconnected service tunnel connections comprise at least: the tunnel ID of the disconnected service tunnel, the encrypted key for communication of the disconnected service tunnel, the subscriber's service authorization information related to the disconnected service tunnel, the control and status information related to the maintenance of the disconnected service tunnel, the subscriber subscription information related to the disconnected service tunnel connection. Generally, the service tunnel is used to bear the service connection.

In the present invention, the main reasons for initiating a procedure to disconnect the service tunnel are:
1). The radio signal disappears or the subscriber connection is disconnected caused by the WLAN access network problems;
2). The service needs to be terminated because of the intervention of the operators or the initiation from other network equipment to terminate the subscriber connection immediately, with the related radio connection to be released immediately, or being released, or having been released.

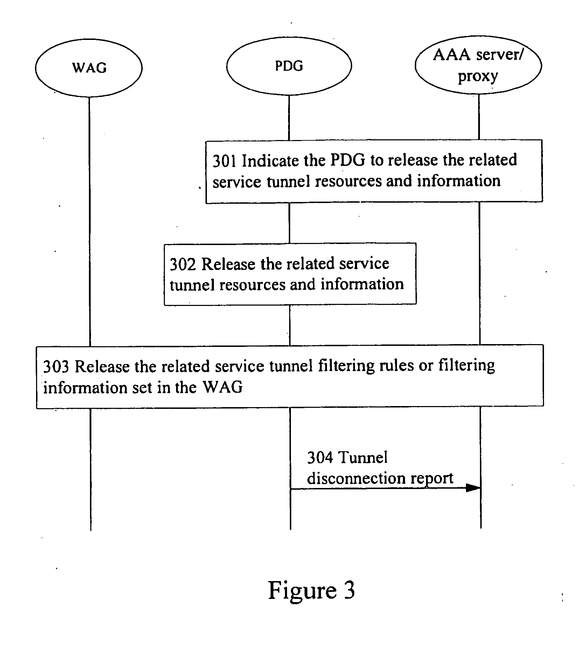

In the present invention, the basic procedure to release the resources related to the disconnected service tunnel is shown in figure 3 with the following steps:
Step 301. When a service authentication and/or authorization module determines to release the related service tunnel related resources for a subscriber, it will send an indication to release the related service tunnel related resources to the corresponding PDG to disconnect the service tunnel used by the present service to be terminated. At this time, if the service authentication and/or authorization module determines that the disconnection reason is that the subscriber's basic connection has been disconnected, or the subscriber's basic connection will be disconnected immediately, or the present subscriber has been offline, or the subscriber has been or will be disconnected completely with the present service authentication and/or authorization module for control, then the release reason indicator will be carried by a resource release indication. Furthermore, the WLAN or the service authentication and/or authorization module could initiate a procedure at one time to disconnect all conversation connections and all service connections and indicate the corresponding PDG to release all service tunnel related resources related to the present subscriber. The service authentication and/or authorization module could be a 3GPP AAA server and the corresponding PDG is the one corresponding to the service tunnel to be disconnected.
Step 302. After receiving the disconnection indication from the service authentication and/or authorization module, if the indication is to release all service tunnel related resources related to the subscriber, the corresponding PDG releases directly all the service tunnel related resources related to the subscriber, without initiating a procedure to the subscriber to disconnect the service tunnel.
Step 303. When the PDG is releasing the related resources, if it is found that when the service tunnel is established, the PDG has set filtering rules in the WAG equipment or the service authentication and/or authorization module has sent related filtering information to the WAG, a procedure needs to be initiated to the WAG to remove the set filtering rules or filtering information. In this case, the PDG could send the indication directly to the WAG to remove the set filtering rules or filtering information, or send the indication to the WAG through the service authentication and/or authorization module to remove the set filtering rules or filtering information. If there exists related filtering information records in the service authentication and/or authorization module, the service authentication and/or authorization module could directly initiate the procedure to the WAG to remove the related filtering information.
Step 304. The PDG sends a tunnel disconnection report or an acknowledgement (ACK) message for release completion to the service authentication and/or authorization module, showing that the subscriber's service tunnel connection resources have been released.

The tunnel disconnection report or the ACK message for release completion could be sent to the service authentication and/or authorization module through the service termination signaling. The PDG could release the service tunnel related resources before sending the tunnel disconnection report, or it could send the tunnel disconnection report first and then release the service tunnel related resources after receiving the ACK message for the tunnel disconnection report from the service authentication and/or authorization module, or it could first release part of the service tunnel related resources which need not be sent to the service authentication and/or authorization module and then release the remaining service tunnel related resources after receiving the ACK message for the tunnel disconnection report from the service authentication and/or authorization module. Wherein, the service tunnel related resources include: the tunnel ID, the encrypted key related to the service tunnel, the subscriber's service authorization information related to the service tunnel, the control information related to the maintenance for the service tunnel.

After receiving the tunnel disconnection report, the service authentication and/or authorization module refreshes its information related to the disconnected service tunnel connection, such as the subscriber's connection status, the related tunnel information, the tunnel ID and the tunnel security information, etc.

After receiving the tunnel disconnection report, the service authentication and/or authorization module will return an ACK message. If the PDG does not receive the ACK message after a limited period of time, it should send the tunnel disconnection report to the service authentication and/or authorization module again.

With reference to drawings and embodiments, the invention and its objective, technical scheme and advantages, will be described in more detail in the following.

### Embodiment 1. The user terminal initiates the disconnection to release the related network resources.

In this embodiment, the user terminal initiates the service tunnel disconnection and the service authentication and/or authorization module is the 3GPPP AAA server. The reasons for initiating the service tunnel disconnection could be: the subscriber requires to disconnect the conversation connection immediately, or the service authentication and/or authorization module determines to release the service tunnel related resources occupied by the subscriber in the PDG according to the initiation caused by other subscriber requirement or according to the parameter changes or operational settings. If the service authentication and/or authorization module has recorded the WAGs having set the filtering rules or filtering information of the service tunnel to be disconnected for the present subscriber, it could initiate the procedure to the recorded WAG to release the related resources or initiate the procedure after receiving the determination result from the PDG.

After receiving the disconnection request initiated by the user terminal, the 3GPP AAA server/proxy initiates a tunnel disconnection request to the PDG corresponding to the service tunnel and the PDG releases its related service tunnel related resources. If the PDG determines that it needs to remove the related filtering rules set in the WAG equipment when the service tunnel is established, it initiates a procedure to the corresponding WAG to remove the filtering rules. Furthermore, the PDG sends a tunnel disconnection report to the 3GPP AAA server/proxy. The 3GPP AAA server/proxy refreshes its information related to the disconnected service tunnel connection after receiving the tunnel disconnection report. Wherein, the corresponding WAG is the one where the filtering rules or filtering information set corresponding to the present disconnected service tunnel connection are stored. The above the procedure is shown in steps 301 - 304 of Figure 3.

### Embodiment 2. The WLAN access network initiates the disconnection to release the related network resources.

In this embodiment, the WLAN access network initiates the service tunnel disconnection and the service authentication and/or authorization module is the 3GPPP AAA server. The reasons for initiating the service tunnel disconnection could be: the operator's intervention, or having been released or loss of radio resources due to connection overtime or insufficient capacity of the WLAN access network, or the detected offline status of the subscriber, etc. In this embodiment, there exists the service tunnel connection for the subscriber and the filtering rules are stored in the WAG.

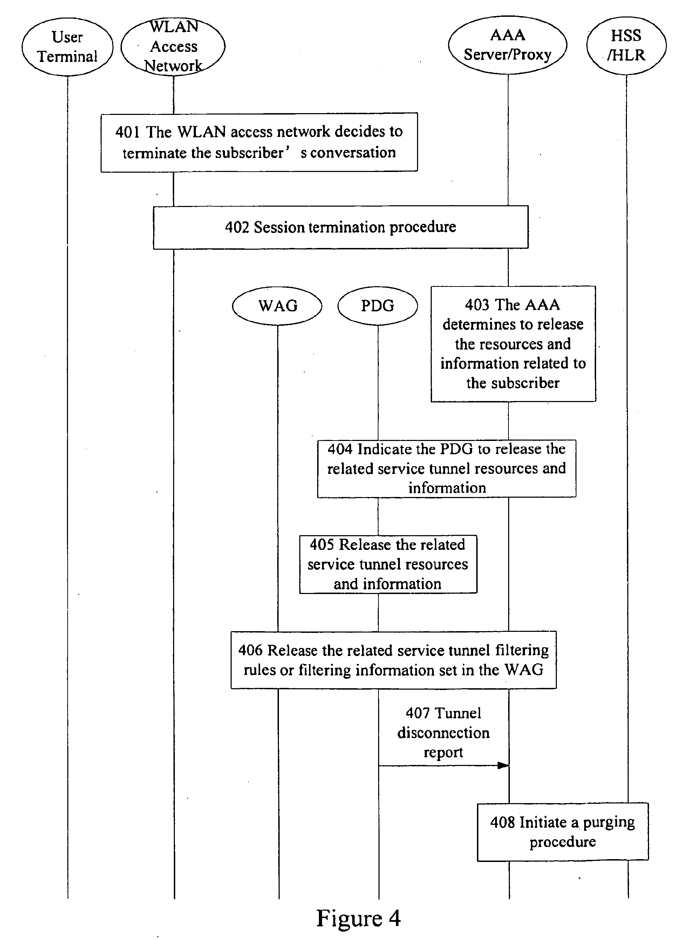

As shown in Figure 4, in this embodiment, the WLAN access network initiates the service tunnel disconnection procedure to release the related network resources, including the following steps:
Step 401 and 402. When detecting that the radio connection of a subscriber has been disconnected, the WLAN access network initiates the session termination procedure and interacts with the 3GPP AAA server/proxy to terminate the subscriber's conversation and to complete the disconnection of the subscriber's corresponding connection. That is, the WLAN access network initiates the session termination procedure to the 3GPP AAA server directly or through the 3GPP AAA proxy. Wherein, the session termination procedure refers to the disconnection procedure for a subscriber's conversation connection which has been specified in the prior standards and described in detail in the RADIUS protocol and the DIAMETER protocol of IETF. In this case, the session termination procedure is: the WLAN access network sends out the session termination signaling and reports the related charging information to the 3GPP AAA server; the 3GPP AAA server removes related control information and terminates the control of the charging and authorization for the subscriber.
Step 403. The 3GPP AAA server determines whether to release the related network resources and information corresponding to the subscriber according to the stored subscriber status information and subscriber subscription information, if yes, continues to execute Step 404; otherwise, terminates the present procedure. In this embodiment, having known that the subscriber's basic connection has been disconnected, the 3GPP AAA server decides to release all the related network resources and information occupied by the corresponding subscriber.
Steps 404 - 407. As the service tunnel connection exists for the subscriber, the 3GPP AAA server/proxy indicates the PDG corresponding to the present disconnected connection to release related service tunnel related resources and information. That is, the 3GPP AAA server sends an indication to release the service tunnel related resources to the corresponding PDG directly or through the 3GPP AAA proxy. The corresponding PDG releases its related service tunnel related resources and information after receiving the indication to release the service tunnel related resources. After that, the 3GPP AAA server/proxy interacts with the WAG to remove the service tunnel filtering rules or filtering information related to the present disconnected connection and set in the WAG. After all the related resources and information in the PDG and WAG are released completely, the PDG sends a tunnel disconnection report to the 3GPP AAA server/proxy.
   Wherein, if the subscriber's basic connection will be disconnected immediately or the subscriber has been offline, the 3GPP AAA server could indicate the corresponding PDG to release all service tunnel related resources of the present subscriber and the PDG will release all its stored authorization information corresponding to the subscriber after receiving the indication to release all service tunnel related resources of the present subscriber from the 3GPP AAA server.
Step 408. After receiving the tunnel disconnection report from the PDG, the 3GPP AAA server/proxy knows that the release of resources and information in the related equipments has been completed and then refreshes its related status information and parameters and initiates a purging procedure to remove the subscriber's information. Wherein, the purging procedure refers to that if it is needed for the HSS/HLR to release its stored related subscriber information corresponding to the present disconnected connection immediately or after a certain period of time, the 3GPP AAA server/proxy will interact with the HSS/HLR and the state data in the HSS/HLR will be refreshed.

### Embodiment 3. The WAG initiates the disconnection to release the related network resources.

In this embodiment, the WAG initiates the service tunnel disconnection and the service authentication and/or authorization module is the 3GPPP AAA server. The reason for initiating the service tunnel disconnection could be: the WAG determines according to some reasons that the subscriber is illegal or the requested service cannot be provided. In this embodiment, there exists the service tunnel connection and the filtering rules are stored in the WAG. The differences between this embodiment and Embodiment 2 are the different procedures to initiate the service tunnel disconnection and the added step to release related resources between the WLAN and the user terminal in this embodiment. Other processing steps and detailed descriptions are the same as those in the Embodiment 2.

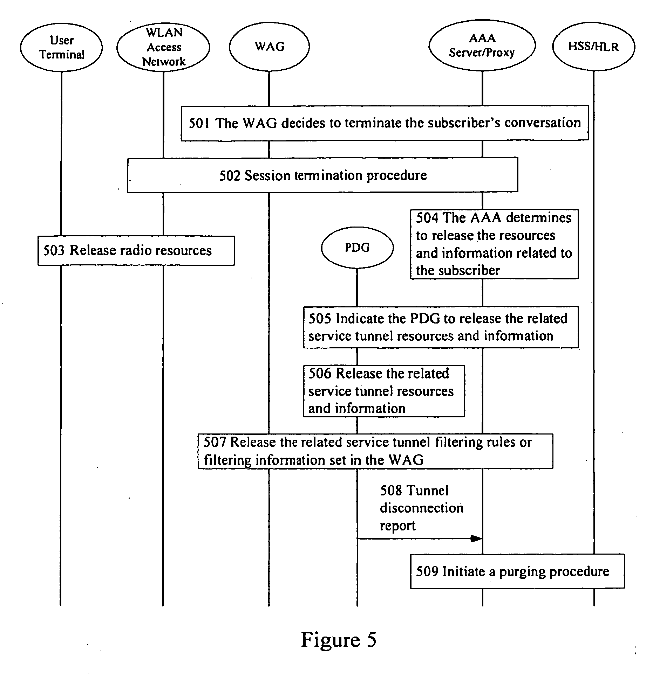

As shown in Figure 5, in this embodiment, the WAG initiates the service tunnel disconnection to release the related resources, including the following steps:
Steps 501∼503., The WAG determines according to some reasons that the subscriber is illegal or the requested service cannot be provided, it will send the determination information to the 3GPP AAA server directly or through the 3GPP AAA proxy and initiates the session termination procedure for the subscriber.

In this embodiment, as the subscriber can access the service network only through the WAG, the 3GPP AAA server/proxy will further indicate the WLAN access network to release the radio resources. That is, after the session termination procedure between the 3GPP AAA server/proxy and the WLAN is completed, the WLAN indicates the user terminal to release the related radio resources.
Steps 504-509. These steps and related descriptions are similar to the Steps 403-408 in the Embodiment 2. The difference is that it is according to the present subscriber status information and subscriber subscription information that the 3GPP AAA server determines whether to release the service tunnel related resources related to the present subscriber. In this embodiment, the 3GPP AAA server determines whether to release the service tunnel related resources related to the subscriber according to the determination information from the WAG showing that the subscriber is illegal or the requested service cannot be provided. For instance, it is determined whether there exists the service tunnel connection for the subscriber, if yes, the PDG will be indicated to release the related service tunnel related resources.

### Embodiment 4. The PDG initiates the disconnection to release the related network resources.

The steps in this embodiment are similar to those in the Embodiment 3. In this embodiment, the PDG only provides the determination information to the 3GPP AAA server/proxy and will not initiate the procedure to release its corresponding service tunnel related resources occupied by the subscriber. If the 3GPP AAA server/proxy determines according to the present subscriber status information and subscriber subscription information that it needs to release the related service tunnel related resources and information occupied by the subscriber, then continues to execute steps 504-509.

### Embodiment 5. The OCS initiates the disconnection to release the related network resources.

During the course of online charging, when the charging credit in the 3GPP AAA server/proxy is insufficient for the service, an online charging credit application will be sent to the OCS. In this case, if the OCS rejects the online charging credit application, the 3GPP AAA server/proxy will initiate a session termination procedure for the subscriber to the WLAN and then the WLAN will process the session termination procedure and initiate to disconnect the radio connection and release the related resources.

Equally, the 3GPP AAA server/proxy needs to determine whether to release the related resources and information of the subscriber. If it is found that the service tunnel connection exists between the subscriber and the PDG, then a procedure to release the resources related to the service tunnel will be initiated. If there are filtering rules or filtering information set in the WAG, then the interaction with the WAG is needed to remove related filtering rules or filtering information. If the 3GPP AAA server/proxy needs to remove the stored subscriber information immediately or after a certain period of time, it should initiate a purging procedure to the HSS/HLR.

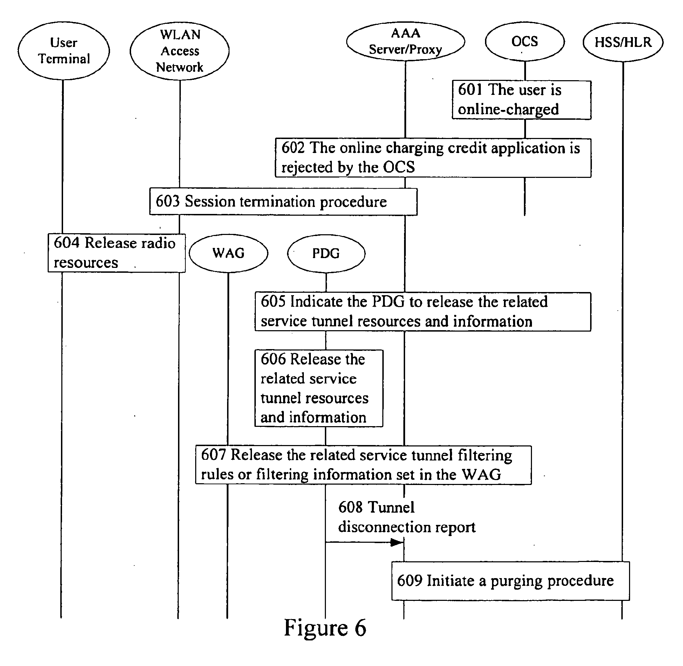

In this embodiment, the OCS initiates the service tunnel disconnection and the service authentication and/or authorization module is the 3GPPP AAA server. The reason for initiating the service tunnel disconnection is that the OCS rejects the online credit application. In this embodiment, there exists the service tunnel connection for the subscriber and there are filtering rules stored in the WAG. In this embodiment, the OCS initiates the service tunnel disconnection to release the related network resources, as shown in Figure 6, including the following steps:
Steps 601 and 602. During the course of online charging, the charging credit in the 3GPP AAA server/proxy is insufficient for the service and the online charging credit application is rejected by the OCS. That is, the OCS rejects the online charging credit application of the subscriber.
Steps 603 and 604. The 3GPP AAA server/proxy determines according to the rejection information and the preset corresponding processing rules for the rejection whether to initiate to the WLAN access network a session termination procedure for the subscriber whose online charging credit application was rejected, if yes, the WLAN releases the radio resources according to the session termination procedure; otherwise, the corresponding processing will be made according to the determination result. For instance, the operator could preset that some subscribers could access some specified free service resources after their online charging credit applications are rejected. Therefore, after the online charging credit application is rejected in the 3GPP AAA server/proxy, the free service resources could be accessed and the present processing procedure is terminated.
Steps 605-609. The steps and related descriptions are the same as Steps 404-408 in the Embodiment 2.

The main difference between this embodiment and the Embodiment 2 is that the 3GPP AAA server/proxy needs to initiate to the WLAN a procedure to disconnect the basic connection and the radio connection in this embodiment, as shown in Step 604.

### Embodiment 6. The HSS/HLR initiates the disconnection to release related network resources.

In this embodiment, the HSS/HLR initiates the service tunnel disconnection and the service authentication and/or authorization module is the 3GPPP AAA server. The reason for initiating the service tunnel disconnection is that the subscriber subscription information in the HSS/HLR is removed and the deregistration procedure is initiated to the 3GPP AAA server. The 3GPP AAA server initiates a session termination procedure to the WLAN. The WLAN processes the session termination procedure and initiates to disconnect the radio connection and release the related resources.

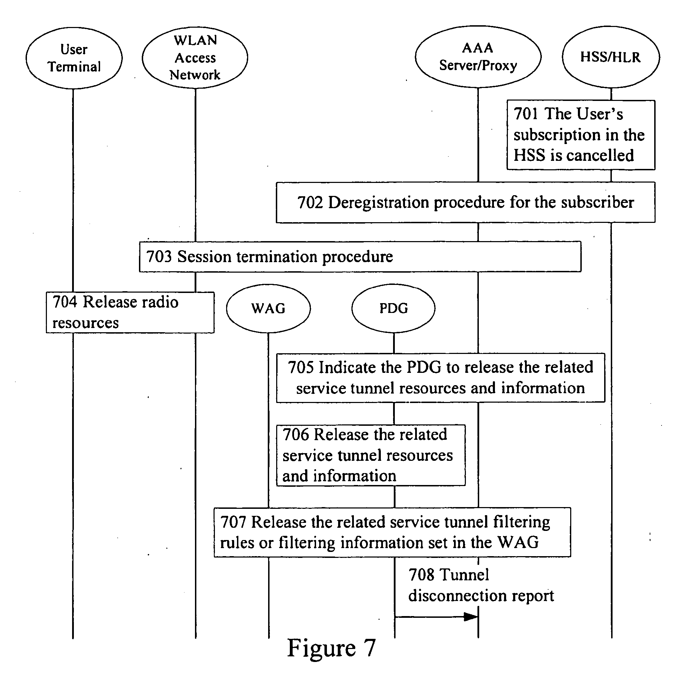

Equally, the 3GPP AAA server needs to determine whether to release the related resources and information of the subscriber. If the 3GPP AAA server finds that there exists the related service tunnel connection between the subscriber and the PDG, it will initiate the procedure to release the resources related to the service tunnel. Therefore, in this embodiment, The HSS/HLR initiates the service tunnel disconnection to release the related resources, as shown in Figure 7, including the following steps:
Steps 701 and 702. The subscriber subscription information in the HSS/HLR is removed and the deregistration procedure is initiated to the 3GPP AAA server/proxy.
Steps 703∼708. The steps and related descriptions are the same as Steps 603-608 in the Embodiment 5.

The main difference between this embodiment and the Embodiment 5 is that after releasing the related resources of other nodes, such as the WLAN access network, the PDG or the WAG, the 3GPP AAA server/proxy will remove its all the stored subscriber information directly, without interacting with the HSS/HLR.

### Embodiment 7. The release of the network resources under the circumstances of more conversation connections.

In this embodiment, the service authentication and/or authorization module is the 3GPPP AAA server. There is only one radio connection between the user terminal and the WLAN access network and there are two conversation connections are established simultaneously on the radio connection: WLAN-VPLMN1- HPLMN and WLAN-VPLMN2-HPLMN which have established service tunnel connections with the H-PDGa, respectively. In addition, there exist the WAG2 and the service tunnel connection with V-PDG2 in the VPLMN2 while there exist the WAG1 and the service tunnel connection with V-PDG1 in the VPMN1. Wherein, the H-PDGa refers to a PDG in the home network.

There are two circumstances:
1). For the conversation disconnection initiated by the WLAN access network through the VPLMN2 or the conversation disconnection caused by the interaction between the subscriber and the WAG2, if only the VPLMN2 conversation is disconnected, then, after completing the disconnection procedure, the 3GPP AAA server will indicate the V-PDG2 to release related resources through the 3GPP AAA proxy in the VPLMN2 if it determines there exists the resource connection of PDG in the VPLMN2; or, after receiving the session termination indication, the 3GPP AAA proxy will directly initiate the procedure to release the related resources to the V-PDG2 and then report to the 3GPP AAA server in the home network.
   The V-PDG2 removes all the information related to the subscriber's service after receiving the indication to release the related resources.
   When the 3GPP AAA server further determines the existence of the service tunnel connection resources occupied by the subscriber's VPLMN2-based conversation in the H-PDGa in the home network, it will initiate the procedure to the H-PDGa to release the service tunnel related resources for the VPLMN2-based conversation.
   After receiving the indication to release the service tunnel related resources, the H-PDGa only releases the service tunnel related resources for the VPLMN2-based conversation while keeps those for the VPLMN1-based conversation. Furthermore, the H-PDGa will also keep some subscriber subscription information shared by both service tunnel connections.
2). For the procedure to disconnect the subscriber's connections initiated by the HSS/HLR or the OCS, it shows all connections of the subscriber cannot exist. In this case, the 3GPP AAA server needs to indicate the H-PDGa to release all the related resources and information occupied by the subscriber. Wherein, the indication to the H-PDGa could carry the reason indicator, which means that all the connections for the corresponding subscriber cannot exist.

In addition, the 3GPP AAA server indicates the 3GPP AAA proxy in the VLMN1 and VLMN2 networks, respectively, to release the related resources occupied by the corresponding PDG, such as V-PDG1 or V-PDG2, or, when the session termination is initiated to the WLAN access network through the 3GPP AAA proxy, the 3GPP AAA proxy could determine independently whether there exists a PDG service tunnel connection, if yes, the related service tunnel related resources will be released.

The 3GPP AAA proxy will send a tunnel disconnection report to the 3GPP AAA server after completing the release procedure with the corresponding PDG, to confirm the completion of the release procedure. At this time, all information related to the subscriber and stored in the H-PDGa, V-PDG1 and V-PDG2 is removed. Furthermore, if there is related filtering information stored in the WAG1 and WAG2, it could also be removed in the same way shown in the embodiments.

Other than the above embodiments, there may be a special circumstance in practice: the PDG has completed the release procedure before receiving the indication from the 3GPP AAA server/proxy to release the related service tunnel related resources and information. Therefore, the PDG cannot identify the subscriber set in the indication from the 3GPP AAA server/proxy. In this case, the PDG could send a response message to the 3GPP AAA server/proxy directly.

All the above are just the preferred embodiments of the invention; it is by no means intended to limit the protection scope of the invention, which is defined by the appended independent claim 1.

## Claims

1. A method for releasing network resources occupied by a subscriber in Wireless Local Area Network, WLAN, in a 3GPP-WLAN inter-working network, **characterized in that** it comprises the following steps:
a service authentication and/or authorization module initiating (301, 404, 505, 605, 705) an indication to release the service tunnel related resources to a Packet Data Gateway, PDG, corresponding to the service tunnel connection to be disconnected;
upon reception of the indication to release the service tunnel related resources, the PDG releasing (302, 405, 506, 606, 706) related resources of the tunnel to be disconnected.

2. The method according to Claim 1, further comprising: after the service authentication and/or authorization module receives disconnection information from a network node or decides to disconnect the connection related to the subscriber according to the changes of stored information, if there exist the service tunnel related resources to be released which are related to a service tunnel connection corresponding to a conversation connection to be disconnected or has been disconnected, determining (403, 504) the PDG corresponding to the service tunnel connection and initiating an indication to release the service tunnel related resources to the determined PDG.

3. The method according to Claim 2, wherein the network node is a WLAN access network, before receiving the disconnection information, further comprising:
the WLAN access network initiating (401, 402) a session termination procedure for the specified subscriber to the service authentication and/or authorization module directly or through a service authentication and/or authorization proxy module;
if the service authentication and/or authorization module decides to release the service tunnel related resources and information related to the specified subscriber according to the stored subscriber status information and subscriber subscription information, continuing with the subsequent steps; otherwise, terminating the procedure.

4. The method according to Claim 2, wherein the network node is a WLAN Access Gateway, WAG, before receiving the disconnection information, further comprising:
the WAG initiating (501, 502) a session termination procedure for the specified subscriber to the service authentication and/or authorization module directly or through a service authentication and/or authorization proxy module;
the service authentication and/or authorization module terminating the connection of the specified subscriber through the WAG, if the service authentication and/or authorization module decides not to disconnect the WLAN conversation connection according to the stored present subscriber status information and subscriber subscription information, terminating the procedure; if the service authentication and/or authorization module decides to disconnect the WLAN conversation connection according to the stored present subscriber status information and subscriber subscription information, initiating the session termination procedure for the specified subscriber to the WLAN access network, indicating the disconnection of the radio connection for the specified subscriber, and if it is needed to release the service tunnel related resources and information related to the specified subscriber according to the stored present subscriber status information and subscription information, continuing with the subsequent steps; otherwise, terminating the procedure.

5. The method according to Claim 2, wherein the network node is an Online Charging System, OCS, before receiving the disconnection information, further comprising:
the service authentication and/or authorization module sending charging credit application to the OCS and the OCS rejecting (602) the application;
if the service authentication and/or authorization module decides to initiate a session termination procedure for the specified subscriber to the WLAN access network according to the rejection information and the set processing rules for the rejection, initiating a session termination procedure for the specified subscriber and indicating the disconnection of the radio connection for the specified subscriber; otherwise, executing the corresponding processing.

6. The method according to Claim 2, wherein the network node is Home Subscriber Server, HSS/ Home Location Register, HLR, before receiving the disconnection information, further comprising:
the HSS/HLR initiating (701, 702) a deregistration procedure for the specified subscriber to the service authentication and/or authorization module after the subscriber subscription information is cancelled;
the service authentication and/or authorization module initiating (703) a session termination procedure for the specified subscriber to the WLAN access network and indicating to disconnect the radio connection for the specified subscriber.

7. The method according to Claim 1, 2, 3, 4 or 5, further comprising: the PDG sending a tunnel disconnection report to the service authentication and/or authorization module, the service authentication and/or authorization module refreshing its information related to the disconnected service tunnel connection after receiving the tunnel disconnection report.

8. The method according to Claim 7, further comprising: the service authentication and/or authorization module initiating a purging procedure to the HSS/HLR to remove the subscriber information after receiving the tunnel disconnection report.

9. The method according to Claim 7, wherein the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases first its related service tunnel related resources that need not be sent to the service authentication and/or authorization module and then releases the remaining service tunnel related resources after receiving an acknowledgement message for the tunnel disconnection report from the service authentication and/or authorization module.

10. The method according to Claim 6, further comprising: the PDG sending the tunnel disconnection report to the service authentication and/or authorization module, the service authentication and/or authorization module refreshing its information related to the disconnected service tunnel connection after receiving the tunnel disconnection report.

11. The method according to Claim 10, wherein the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases first its related service tunnel related resources that need not be sent to the service authentication and/or authorization module and then releases the remaining service tunnel related resources after receiving an acknowledgement message for the tunnel disconnection report from the service authentication and/or authorization module.

12. The method according to Claim 1, 2, 3, 4 or 5, further comprising: if there exist filtering rules or filtering information corresponding to the present disconnected service tunnel connection in the WAG, sending (303, 406, 507, 607) an indication to remove the filtering rules or filtering information to the WAG, the WAG removing its corresponding filtering rules or filtering information after receiving the indication.

13. The method according to Claim 12, wherein the sending an indication to remove the filtering rules or filtering information to the WAG is: sending an indication to remove the filtering rules or filtering information to the WAG by the PDG corresponding to the present disconnected service tunnel connection directly or by the service authentication and/or authorization module.

14. The method according to Claim 12, wherein after the WAG removing its corresponding filtering rules or filtering information, further comprising: the PDG sending (304, 407, 508, 608) the tunnel disconnection report to the service authentication and/or authorization module, the service authentication and/or authorization module refreshing its information related to the disconnected service tunnel connection after receiving the tunnel disconnection report.

15. The method according to Claim 14, further comprising: the service authentication and/or authorization module initiating (408, 509, 609) a purging procedure to the HSS/HLR to remove the subscriber information after receiving the tunnel disconnection report.

16. The method according to Claim 14, wherein the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases first its related service tunnel related resources that need not be sent to the service authentication and/or authorization module and then releases the remaining service tunnel related resources after receiving an acknowledgement message for the tunnel disconnection report from the service authentication and/or authorization module.

17. The method according to Claim 6, further comprising: if there exist filtering rules or filtering information corresponding to the present disconnected service tunnel connection in the WAG, sending (707) an indication to remove the filtering rules or filtering information to the WAG, the WAG removing its corresponding filtering rules or filtering information after receiving the indication; otherwise, no processing being made.

18. The method according to Claim 17, wherein the sending indication to remove the filtering rules or filtering information to the WAG is: sending an indication to remove the filtering rules or filtering information to the WAG by the PDG corresponding to the present disconnected service tunnel connection directly or by the service authentication and/or authorization module.

19. The method according to Claim 17, wherein after the WAG removing its corresponding filtering rules or filtering information, further comprising: the PDG sending (708) a tunnel disconnection report to the service authentication and/or authorization module, the service authentication and/or authorization module refreshing its information related to the disconnected service tunnel connection after receiving the tunnel disconnection report.

20. The method according to Claim 19, wherein the PDG releases its related service tunnel related resources before sending the tunnel disconnection report to the service authentication and/or authorization module, or sends the tunnel disconnection report first and then releases its related service tunnel related resources after receiving an acknowledgement message for the tunnel disconnection report from the service authentication and/or authorization module, or releases first its related service tunnel related resources that need not be sent to the service authentication and/or authorization module and then releases the remaining service tunnel related resources after receiving an acknowledgement message for the tunnel disconnection report from the service authentication and/or authorization module.

21. The method according to Claim 2, further comprising: if it is needed to release the service tunnel related resources of all the service tunnel connections for the present subscriber, the PDG removing all the stored authorization information corresponding to the present subscriber when releasing the related service tunnel related resources of the present disconnected service tunnel connections.

22. The method according to Claim 21, further comprising: if the basic connection for the present subscriber needs to be disconnected immediately, or the subscriber has been offline, or the subscriber has been or will be immediately disconnected completely with the service authentication and/or authorization module for control, the service authentication and/or authorization module initiating to the PDG to release all the service tunnel related resources related to the subscriber.

23. The method according to Claim 2, 3, 4, 5 or 6, wherein the service tunnel related resources comprises: the tunnel ID of the disconnected service tunnel, the encrypted key for communication of the disconnected service tunnel, the subscriber's service authorization information related to the disconnected service tunnel, the control information and status information related to the maintenance of the disconnected service tunnel, the subscriber subscription information related to the service tunnel connection.

24. The method according to Claim 1, 2, 3, 4, 5 or 6, wherein the service authentication and/or authorization module is a 3GPP Authentication, Authorization, Accounting, AAA, server, or a AAA proxy.

## Patentansprüche

1. Verfahren zum Freigeben von durch einen Teilnehmer in einem drahtlosen lokalen Netz, WLAN, eingenommenen Netzressourcen in einem 3GPP-WLAN-Interworking-Netz, **dadurch gekennzeichnet, dass** es die Schritte umfasst, dass
ein Dienstauthentifizierungs- und/oder -autorisierungsmodul einen Hinweis zum Freigeben der mit dem Diensttunnel in Beziehung stehenden Ressourcen für ein Paketdaten-Gateway, PDG, das der zu trennenden Diensttunnelverbindung entspricht, initiiert (301, 404, 505, 605, 705);
das PDG beim Empfang des Hinweises zum Freigeben der mit dem Diensttunnel in Beziehung stehenden Ressourcen in Beziehung stehende Ressourcen des zu trennenden Tunnels freigibt (302, 405, 506, 606, 706).

2. Verfahren nach Anspruch 1,
das ferner umfasst, dass, nachdem das Dienstauthentifizierungs- und/oder -autorisierungsmodul eine Trennungsinformation von einem Netzknoten empfängt oder gemäß den Änderungen einer gespeicherten Information entscheidet, die mit dem Teilnehmer in Beziehung stehende Verbindung zu trennen, wenn die freizugebenden mit dem Diensttunnel in Beziehung stehenden Ressourcen, die mit einer Diensttunnelverbindung in Beziehung stehen, die einer Gesprächsverbindung entspricht, die getrennt werden soll oder getrennt wurde, vorhanden sind, das PDG, das der Diensttunnelverbindung entspricht, ermittelt wird (403, 504), und ein Hinweis zum Freigeben der mit dem Diensttunnel in Beziehung stehenden Ressourcen für das ermittelte PDG initiiert wird.

3. Verfahren nach Anspruch 2,
wobei der Netzknoten ein WLAN-Zugriffsnetz ist, und das vor dem Empfangen der Trennungsinformation ferner umfasst, dass das WLAN-Zugriffsnetz eine Sitzungsbeendungsprozedur für den spezifizierten Teilnehmer für das Dienstauthentifizierungs- und/oder -autorisierungsmodul direkt oder über ein Dienstauthentifizierungs- und/oder -autorisierungs-Proxy-Modul initiiert (401, 402);
wenn das Dienstauthentifizierungs- und/oder -autorisierungsmodul gemäß der gespeicherten Teilnehmerstatusinformation und Teilnehmerteilnahmeinformation entscheidet, die mit dem Diensttunnel in Beziehung stehenden Ressourcen und die Information, die mit dem spezifizierten Teilnehmer in Beziehung steht, freizugeben, mit den nachfolgenden Schritten fortgefahren wird; andernfalls die Prozedur beendet wird.

4. Verfahren nach Anspruch 2,
wobei der Netzknoten ein WLAN-Zugriffs-Gateway, WAG, ist, und das vor dem Empfangen der Trennungsinformation ferner umfasst, dass
das WAG eine Sitzungsbeendungsprozedur für den spezifizierten Teilnehmer für das Dienstauthentifizierungs- und/oder -autorisierungsmodul direkt oder über ein Dienstauthentifizierungs- und/oder -autorisierungs-Proxy-Modul initiiert (501, 502);
das Dienstauthentifizierungs- und/oder -autorisierungsmodul die Verbindung des spezifizierten Teilnehmers über das WAG beendet, und wenn das Dienstauthentifizierungs- und/oder -autorisierungsmodul gemäß der gespeicherten momentanen Teilnehmerstatusinformation und Teilnehmerteilnahmeinformation entscheidet, die WLAN-Gesprächsverbindung nicht zu trennen, die Prozedur beendet wird; wenn das Dienstauthentifizierungs- und/oder -autorisierungsmodul gemäß der gespeicherten momentanen Teilnehmerstatusinformation und Teilnehmerteilnahmeinformation entscheidet, die WLAN-Gesprächsverbindung zu trennen, die Sitzungsbeendungsprozedur für den spezifizierten Teilnehmer für das WLAN-Zugriffsnetz initiiert wird, auf die Trennung der Funkverbindung für den spezifizierten Teilnehmer hingewiesen wird, und wenn es gemäß der gespeicherten momentanen Teilnehmerstatusinformation und Teilnahmeinformation notwendig ist, die mit dem Diensttunnel in Beziehung stehenden Ressourcen und die Information, die mit dem spezifizierten Teilnehmer in Beziehung steht, freizugeben, mit den nachfolgenden Schritten fortgefahren wird; andernfalls die Prozedur beendet wird.

5. Verfahren nach Anspruch 2,
wobei der Netzknoten ein Online-Abrechnungssystem, OCS, ist, und das vor dem Empfangen der Trennungsinformation ferner umfasst, dass
das Dienstauthentifizierungs- und/oder -autorisierungsmodul eine Abrechnungskreditanwendung an das OCS sendet und das OCS die Anwendung ablehnt (602);
wenn das Dienstauthentifizierungs- und/oder -autorisierungsmodul gemäß der Ablehnungsinformation und den festgelegten Verarbeitungsregeln für die Ablehnung entscheidet, eine Sitzungsbeendungsprozedur für den spezifizierten Teilnehmer für das WLAN-Zugriffsnetz zu initiieren, eine Sitzungsbeendungsprozedur für den spezifizierten Teilnehmer initiiert wird und auf die Trennung der Funkverbindung für den spezifizierten Teilnehmer hingewiesen wird; andernfalls die entsprechende Verarbeitung ausgeführt wird.

6. Verfahren nach Anspruch 2,
wobei der Netzknoten ein Heimteilnehmer-Server, HSS/Heimatregister, HLR, ist, und das vor dem Empfangen der Trennungsinformation ferner umfasst, dass
der/das HSS/HLR nach dem Löschen der Teilnehmerteilnahmeinformation eine Abmeldeprozedur für den spezifizierten Teilnehmer für das Dienstauthentifizierungs- und/oder -autorisierungsmodul initiiert (701, 702);
das Dienstauthentifizierungs- und/oder -autorisierungsmodul eine Sitzungsbeendungsprozedur für den spezifizierten Teilnehmer für das WLAN-Zugriffsnetz initiiert (703) und auf das Trennen der Funkverbindung für den spezifizierten Teilnehmer hinweist.

7. Verfahren nach Anspruch 1, 2, 3, 4 oder 5,
das ferner umfasst, dass das PDG einen Tunneltrennungsbericht an das Dienstauthentifizierungs- und/oder -autorisierungsmodul sendet, und das Dienstauthentifizierungs- und/oder -autorisierungsmodul seine mit der getrennten Diensttunnelverbindung in Beziehung stehende Information nach dem Empfangen des Tunneltrennungsberichts aktualisiert.

8. Verfahren nach Anspruch 7,
das ferner umfasst, dass das Dienstauthentifizierungs- und/oder -autorisierungsmodul nach dem Empfangen des Tunneltrennungsberichts eine Entleerungsprozedur für den/das HSS/HLR initiiert, um die Teilnehmerinformation zu entfernen.

9. Verfahren nach Anspruch 7,
wobei das PDG seine in Beziehung stehenden mit dem Diensttunnel in Beziehung stehenden Ressourcen vor dem Senden des Tunneltrennungsberichts an das Dienstauthentifizierungs- und/oder -autorisierungsmodul freigibt, oder den Tunneltrennungsbericht zuerst sendet und dann nach dem Empfangen einer Bestätigungsnachricht für den Tunneltrennungsbericht von dem Dienstauthentifizierungs- und/oder -autorisierungsmodul seine in Beziehung stehenden mit dem Diensttunnel in Beziehung stehenden Ressourcen freigibt, oder zuerst seine in Beziehung stehenden mit dem Diensttunnel in Beziehung stehenden Ressourcen freigibt, die nicht an das Dienstauthentifizierungs- und/oder -autorisierungsmodul gesendet werden müssen, und dann nach dem Empfangen einer Bestätigungsnachricht für den Tunneltrennungsbericht von dem Dienstauthentifizierungs- und/oder -autorisierungsmodul die verbleibenden mit dem Diensttunnel in Beziehung stehenden Ressourcen freigibt.

10. Verfahren nach Anspruch 6,
das ferner umfasst, dass das PDG den Tunneltrennungsbericht an das Dienstauthentifizierungs- und/oder -autorisierungsmodul sendet, und das Dienstauthentifizierungs- und/oder -autorisierungsmodul seine mit der getrennten Diensttunnelverbindung in Beziehung stehende Information nach dem Empfangen des Tunneltrennungsberichts aktualisiert.

11. Verfahren nach Anspruch 10,
wobei das PDG seine in Beziehung stehenden mit dem Diensttunnel in Beziehung stehenden Ressourcen vor dem Senden des Tunneltrennungsberichts an das Dienstauthentifizierungs- und/oder -autorisierungsmodul freigibt, oder den Tunneltrennungsbericht zuerst sendet und dann nach dem Empfangen einer Bestätigungsnachricht für den Tunneltrennungsbericht von dem Dienstauthentifizierungs- und/oder -autorisierungsmodul seine in Beziehung stehenden mit dem Diensttunnel in Beziehung stehenden Ressourcen freigibt, oder zuerst seine in Beziehung stehenden mit dem Diensttunnel in Beziehung stehenden Ressourcen freigibt, die nicht an das Dienstauthentifizierungs- und/oder -autorisierungsmodul gesendet werden müssen, und dann nach dem Empfangen einer Bestätigungsnachricht für den Tunneltrennungsbericht von dem Dienstauthentifizierungs- und/oder -autorisierungsmodul die verbleibenden mit dem Diensttunnel in Beziehung stehenden Ressourcen freigibt.

12. Verfahren nach Anspruch 1, 2, 3, 4 oder 5,
das ferner umfasst, dass, wenn es Filterregeln oder eine Filterinformation, die der momentanen getrennten Diensttunnelverbindung entspricht, in dem WAG gibt, ein Hinweis zum Entfernen der Filterregeln oder der Filterinformation an das WAG gesendet wird (303, 406, 507, 607), und das WAG seine entsprechenden Filterregeln oder seine entsprechende Filterinformation nach dem Empfangen des Hinweises entfernt.

13. Verfahren nach Anspruch 12,
wobei das Senden eines Hinweises zum Entfernen der Filterregeln oder der Filterinformation an das WAG umfasst, dass ein Hinweis zum Entfernen der Filterregeln oder der Filterinformation durch das PDG, das der momentanen getrennten Diensttunnelverbindung entspricht, direkt oder durch das Dienstauthentifizierungs- und/oder -autorisierungsmodul an das WAG gesendet wird.

14. Verfahren nach Anspruch 12,
das ferner umfasst, dass, nachdem das WAG seine entsprechenden Filterregeln oder seine entsprechende Filterinformation entfernt hat, das PDG den Tunneltrennungsbericht an das Dienstauthentifizierungs- und/oder -autorisierungsmodul sendet (304, 407, 508, 608), und das Dienstauthentifizierungs- und/oder -autorisierungsmodul seine Information, die mit der getrennten Diensttunnelverbindung in Beziehung steht, nach dem Empfangen des Tunneltrennungsberichts aktualisiert.

15. Verfahren nach Anspruch 14,
das ferner umfasst, dass das Dienstauthentifizierungs- und/oder -autorisierungsmodul nach dem Empfangen des Tunneltrennungsberichts eine Entleerungsprozedur für den/das HSS/HLR initiiert (408, 509, 609), um die Teilnehmerinformation zu entfernen.

16. Verfahren nach Anspruch 14,
wobei das PDG seine in Beziehung stehenden mit dem Diensttunnel in Beziehung stehenden Ressourcen vor dem Senden des Tunneltrennungsberichts an das Dienstauthentifizierungs- und/oder -autorisierungsmodul freigibt, oder den Tunneltrennungsbericht zuerst sendet und dann nach dem Empfangen einer Bestätigungsnachricht für den Tunneltrennungsbericht von dem Dienstauthentifizierungs- und/oder -autorisierungsmodul seine in Beziehung stehenden mit dem Diensttunnel in Beziehung stehenden Ressourcen freigibt, oder zuerst seine in Beziehung stehenden mit dem Diensttunnel in Beziehung stehenden Ressourcen freigibt, die nicht an das Dienstauthentifizierungs- und/oder -autorisierungsmodul gesendet werden müssen, und dann nach dem Empfangen einer Bestätigungsnachricht für den Tunneltrennungsbericht von dem Dienstauthentifizierungs- und/oder -autorisierungsmodul die verbleibenden mit dem Diensttunnel in Beziehung stehenden Ressourcen freigibt.

17. Verfahren nach Anspruch 6,
das ferner umfasst, dass, wenn es Filterregeln oder eine Filterinformation, die der momentanen getrennten Diensttunnelverbindung entspricht, in dem WAG gibt, ein Hinweis zum Entfernen der Filterregeln oder der Filterinformation an das WAG gesendet wird (707), und das WAG seine entsprechenden Filterregeln oder seine entsprechende Filterinformation nach dem Empfangen des Hinweises entfernt; andernfalls keine Verarbeitung durchgeführt wird.

18. Verfahren nach Anspruch 17,
wobei das Senden eines Hinweises zum Entfernen der Filterregeln oder der Filterinformation an das WAG umfasst, dass ein Hinweis zum Entfernen der Filterregeln oder der Filterinformation durch das PDG, das der momentanen getrennten Diensttunnelverbindung entspricht, direkt oder durch das Dienstauthentifizierungs- und/oder -autorisierungsmodul an das WAG gesendet wird.

19. Verfahren nach Anspruch 17,
das ferner umfasst, dass, nachdem das WAG seine entsprechenden Filterregeln oder seine entsprechende Filterinformation entfernt hat, das PDG einen Tunneltrennungsbericht an das Dienstauthentifizierungs- und/oder -autorisierungsmodul sendet (708), und das Dienstauthentifizierungs- und/oder -autorisierungsmodul seine Information, die mit der getrennten Diensttunnelverbindung in Beziehung steht, nach dem Empfangen des Tunneltrennungsberichts aktualisiert.

20. Verfahren nach Anspruch 19,
wobei das PDG seine in Beziehung stehenden mit dem Diensttunnel in Beziehung stehenden Ressourcen vor dem Senden des Tunneltrennungsberichts an das Dienstauthentifizierungs- und/oder -autorisierungsmodul freigibt, oder den Tunneltrennungsbericht zuerst sendet und dann nach dem Empfangen einer Bestätigungsnachricht für den Tunneltrennungsbericht von dem Dienstauthentifizierungs- und/oder -autorisierungsmodul seine in Beziehung stehenden mit dem Diensttunnel in Beziehung stehenden Ressourcen freigibt, oder zuerst seine in Beziehung stehenden mit dem Diensttunnel in Beziehung stehenden Ressourcen freigibt, die nicht an das Dienstauthentifizierungs- und/oder -autorisierungsmodul gesendet werden müssen, und dann nach dem Empfangen einer Bestätigungsnachricht für den Tunneltrennungsbericht von dem Dienstauthentifizierungs- und/oder -autorisierungsmodul die verbleibenden mit dem Diensttunnel in Beziehung stehenden Ressourcen freigibt.

21. Verfahren nach Anspruch 2,
das ferner umfasst, dass, wenn es notwendig ist, die mit dem Diensttunnel in Beziehung stehenden Ressourcen aller Diensttunnelverbindungen für den momentanen Teilnehmer freizugeben, das PDG die gesamte gespeicherte Autorisierungsinformation, die dem momentanen Teilnehmer entspricht, beim Freigeben der in Beziehung stehenden mit dem Diensttunnel in Beziehung stehenden Ressourcen der momentanen getrennten Diensttunnelverbindungen entfernt.

22. Verfahren nach Anspruch 21,
das ferner umfasst, dass, wenn die Basisverbindung für den momentanen Teilnehmer unmittelbar getrennt werden muss oder der Teilnehmer offline war oder der Teilnehmer für eine Steuerung unmittelbar vollständig von dem Dienstauthentifizierungs- und/oder -autorisierungsmodul getrennt wurde oder wird, das Dienstauthentifizierungs- und/oder -autorisierungsmodul das PDG initiiert, um alle mit dem Diensttunnel in Beziehung stehenden Ressourcen, die mit dem Teilnehmer in Beziehung stehen, freizugeben.

23. Verfahren nach Anspruch 2, 3, 4, 5 oder 6,
wobei die mit dem Diensttunnel in Beziehung stehenden Ressourcen umfassen: die Tunnel-ID des getrennten Diensttunnels, den verschlüsselten Schlüssel für eine Übermittlung des getrennten Diensttunnels, die Dienstautorisierungsinformation des Teilnehmers, die mit dem getrennten Diensttunnel in Beziehung steht, die Steuerinformation und die Statusinformation, die mit der Aufrechterhaltung des getrennten Diensttunnels in Beziehung stehen, die Teilnehmerteilnahmeinformation, die mit der Diensttunnelverbindung in Beziehung steht.

24. Verfahren nach Anspruch 1, 2, 3, 4, 5 oder 6,
wobei das Dienstauthentifizierungs- und/oder -autorisierungsmodul ein 3GPP-Authentifizierungs-, Autorisierungs-, Abrechnungs-Server, 3GPP-AAA-Server, oder ein -AAA-Proxy ist.

## Revendications

1. Procédé de libération de ressources de réseau occupées par un abonné d'un réseau local sans fil, WLAN pour « *Wireless Local Area Network* », dans un réseau d'interconnexion WLAN 3GPP, **caractérisé par** les étapes consistant à :
lancer (301, 404, 595, 605, 705) par un module d'authentification de service et/ou d'autorisation une indication invitant une passerelle de données en paquets, PDG pour « *Packet Data Gateway* », à libérer les ressources liées à un tunnel de service correspondant à la connexion par tunnel de service à déconnecter ;
à réception de l'indication invitant à libérer les ressources liées au tunnel de service, libérer (302, 405, 506, 606, 706) par la passerelle PDG les ressources liées au tunnel à déconnecter.

2. Procédé selon la revendication 1, comprenant en outre les étapes consistant, après que le module d'authentification de service et/ou d'autorisation a reçu des informations de déconnexion d'un noeud du réseau ou a décidé de déconnecter la ressource liée à l'abonné en fonction des modifications à des informations stockées, s'il existe des ressources liées au tunnel de service à libérer qui sont liées à une connexion par tunnel de service correspondant à une connexion de conversation à déconnecter ou qui a été déconnectée, à déterminer (403, 504) la passerelle PDG correspondant à la connexion par tunnel de service et à envoyer à la passerelle PDG déterminée une indication l'invitant à libérer les ressources liées au tunnel de service.

3. Procédé selon la revendication 2, dans lequel le noeud de réseau est un réseau d'accès au réseau WLAN, comprenant en outre, avant la réception des informations de déconnexion, les étapes consistant à :
lancer (401, 402) par le réseau d'accès au réseau WLAN une procédure d'achèvement de session pour l'abonné spécifié vers le module d'authentification de service et/ou d'autorisation, directement ou via un module mandataire d'authentification de service et/ou d'autorisation ;
si le module d'authentification de service et/ou d'autorisation décide de libérer les ressources liées au tunnel de service et des informations liées à l'abonné spécifié en fonction des informations d'état stockées pour l'abonné et des informations d'abonnement de l'abonné, poursuivre par les étapes ultérieures ; sinon, terminer la procédure.

4. Procédé selon la revendication 2, dans lequel le noeud de réseau est une passerelle d'accès au réseau WLAN, WAG pour « *WLAN Access Gateway* », comprenant en outre, avant la réception des informations de déconnexion, les étapes consistant à :
lancer (501, 502) par la passerelle WAG une procédure d'achèvement de session pour l'abonné spécifié vers le module d'authentification de service et/ou d'autorisation, directement ou via un module mandataire d'authentification de service et/ou d'autorisation ;
achever par le module d'authentification de service et/ou d'autorisation la connexion de l'abonné spécifié via la passerelle WAG, si le module d'authentification de service et/ou d'autorisation décide de ne pas déconnecter la connexion de conversation WAG en fonction des informations d'état présent de l'abonné et des informations d'abonnement de l'abonné qui sont stockées, achever la procédure ; si le module d'authentification de service et/ou d'autorisation décide de déconnecter la connexion de conversation WAG en fonction des informations d'état présent de l'abonné et des informations d'abonnement de l'abonné qui sont stockées, lancer pour l'abonné spécifié la procédure d'achèvement de la session avec le réseau d'accès au réseau WLAN, indiquer la déconnexion de la connexion radio pour l'abonné spécifié et s'il est nécessaire de libérer les ressources liées au tunnel de service et des informations liées à l'abonné spécifié en fonction des informations d'état présent de l'abonné et des informations d'abonnement de l'abonné qui sont stockées, poursuivre par les étapes ultérieures ; sinon, terminer la procédure.

5. Procédé selon la revendication 2, dans lequel le noeud de réseau est un système de facturation en ligne, OCS pour « *Online Charging System »,* comprenant en outre, avant la réception des informations de déconnexion, les étapes consistant à :
envoyer par le module d'authentification de service et/ou d'autorisation une demande de crédit de facturation au système OCS et refuser (602) la demande par le service OCS ;
si le module d'authentification de service et/ou d'autorisation décide de lancer pour l'abonné spécifié une procédure d'achèvement de session avec le réseau d'accès au réseau WLAN, en fonction des informations de rejet et des règles de traitement définies pour le rejet, lancer une procédure d'achèvement de session pour l'abonné spécifié et indiquer la déconnexion de la connexion radio pour l'abonné spécifié ; sinon, exécuter le traitement correspondant.

6. Procédé selon la revendication 2, dans lequel le noeud de réseau est le serveur de rattachement de l'abonné, HSS pour « *Home Subscriber Server* », ou le registre de localisation de rattachement, HLR pour « *Home Location Register* », comprenant en outre, avant la réception des informations de déconnexion, les étapes consistant à :
lancer (701, 702) par le serveur HSS ou le registre HLR une procédure de désenregistrement de l'abonné spécifié auprès du module d'authentification de service et/ou d'autorisation après que les informations d'abonnement de l'abonné ont été annulées ;
lancer (703) par le module d'authentification de service et/ou d'autorisation pour l'abonné spécifié une procédure d'achèvement de session avec le réseau d'accès de réseau WLAN et indiquer de déconnecter la connexion radio pour l'abonné spécifié.

7. Procédé selon la revendication 1, 2, 3, 4 ou 5, comprenant en outre les étapes consistant à envoyer par la passerelle PDG un rapport de déconnexion de tunnel au module d'authentification de service et/ou d'autorisation et rafraîchir par le module d'authentification de service et/ou d'autorisation ses informations liées au tunnel de service déconnecté après réception du rapport de déconnexion de tunnel.

8. Procédé selon la revendication 7, comprenant en outre l'étape consistant à lancer par le module d'authentification de service et/ou d'autorisation une procédure de purge vis-à-vis du serveur HSS ou du registre HLR afin de supprimer les informations d'abonné, après réception du rapport de déconnexion de tunnel.

9. Procédé selon la revendication 7, dans lequel la passerelle PDG libère ses ressources liées au tunnel de service avant d'envoyer le rapport de déconnexion de tunnel au module d'authentification de service et/ou d'autorisation, ou bien envoie le rapport de déconnexion de tunnel d'abord puis libère ses ressources liées au tunnel de service après avoir reçu un message d'accusé de réception du rapport de déconnexion de tunnel en provenance du module d'authentification de service et/ou d'autorisation, ou bien libère d'abord ses ressources liées au tunnel de service qui n'ont pas besoin d'être envoyées au module d'authentification de service et/ou d'autorisation puis libère les autres ressources liées au tunnel de service après réception d'un message d'accusé de réception du rapport de déconnexion de tunnel en provenance du module d'authentification de service et/ou d'autorisation.

10. Procédé selon la revendication 6, comprenant en outre les étapes consistant à :
envoyer par la passerelle PDG le rapport de déconnexion de tunnel au module d'authentification de service et/ou d'autorisation et rafraîchir par le module d'authentification de service et/ou d'autorisation ses informations liées à la connexion par tunnel de service déconnectée, après réception du rapport de déconnexion de tunnel.

11. Procédé selon la revendication 10, dans lequel la passerelle PDG libère ses ressources liées au tunnel de service avant d'envoyer le rapport de déconnexion de tunnel au module d'authentification de service et/ou d'autorisation, ou bien envoie le rapport de déconnexion de tunnel d'abord puis libère ses ressources liées au tunnel de service après avoir reçu un message d'accusé de réception du rapport de déconnexion de tunnel en provenance du module d'authentification de service et/ou d'autorisation, ou bien libère d'abord ses ressources liées au tunnel de service qui n'ont pas besoin d'être envoyées au module d'authentification de service et/ou d'autorisation puis libère les autres ressources liées au tunnel de service après réception d'un message d'accusé de réception du rapport de déconnexion de tunnel en provenance du module d'authentification de service et/ou d'autorisation.

12. Procédé selon la revendication 1, 2, 3, 4 ou 5, comprenant en outre, s'il existe des règles de filtrage ou des informations de filtrage correspondant à la présente connexion par tunnel de service déconnectée dans la passerelle WAG, les étapes consistant à envoyer (303, 405, 507, 607) à la passerelle WAG une indication invitant à supprimer les règles de filtrage ou les informations de filtrage et supprimer par la passerelle WAG ses règles de filtrage ou informations de filtrage correspondantes après avoir reçu l'indication.

13. Procédé selon la revendication 12, dans lequel l'étape d'envoi à la passerelle WAG d'une indication invitant à supprimer les règles de filtrage ou les informations de filtrage consiste à envoyer à la passerelle WAG une indication l'invitant à supprimer les règles de filtrage ou les informations de filtrage, par la passerelle PDG correspondant à la connexion par tunnel de service présentement déconnectée, soit directement, soit via le module d'authentification de service et/ou d'autorisation.

14. Procédé selon la revendication 12, comprenant en outre, après que la passerelle WAG a supprimé ses règles de filtrage ou informations de filtrage correspondantes, les étapes consistant à envoyer (304, 407, 508, 608) le rapport de déconnexion de tunnel par la passerelle PDG au module d'authentification de service et/ou d'autorisation et à rafraîchir par le module d'authentification de service et/ou d'autorisation ses informations liées à la connexion par tunnel de service déconnectée après avoir reçu le rapport de déconnexion de tunnel.

15. Procédé selon la revendication 14, comprenant en outre l'étape consistant à lancer (408, 509, 609) par le module d'authentification de service et/ou d'autorisation une procédure de purge vers le serveur HSS ou le registre HLR afin de supprimer les informations d'abonné, après réception du rapport de déconnexion de tunnel.

16. Procédé selon la revendication 14, dans lequel la passerelle PDG libère ses ressources liées au tunnel de service avant d'envoyer le rapport de déconnexion de tunnel au module d'authentification de service et/ou d'autorisation, ou bien envoie le rapport de déconnexion de tunnel d'abord puis libère ses ressources liées au tunnel de service après avoir reçu un message d'accusé de réception du rapport de déconnexion de tunnel en provenance du module d'authentification de service et/ou d'autorisation, ou bien libère d'abord ses ressources liées au tunnel de service qui n'ont pas besoin d'être envoyées au module d'authentification de service et/ou d'autorisation puis libère les autres ressources liées au tunnel de service après réception d'un message d'accusé de réception du rapport de déconnexion de tunnel en provenance du module d'authentification de service et/ou d'autorisation.

17. Procédé selon la revendication 6, comprenant en outre, s'il existe des règles de filtrage ou des informations de filtrage correspondant à la présente connexion par tunnel de service déconnectée dans la passerelle WAG, les étapes consistant à envoyer (707) à la passerelle WAG une indication invitant à supprimer les règles de filtrage ou les informations de filtrage et supprimer par la passerelle WAG ses règles de filtrage ou informations de filtrage correspondantes après avoir reçu l'indication ; sinon, n'effectuer aucun traitement.

18. Procédé selon la revendication 17, dans lequel l'étape d'envoi à la passerelle WAG d'une indication invitant à supprimer les règles de filtrage ou les informations de filtrage consiste à envoyer à la passerelle WAG une indication l'invitant à supprimer les règles de filtrage ou les informations de filtrage, par la passerelle PDG correspondant à la connexion par tunnel de service présentement déconnectée, soit directement, soit via le module d'authentification de service et/ou d'autorisation.

19. Procédé selon la revendication 17, comprenant en outre, après que la passerelle WAG a supprimé ses règles de filtrage ou informations de filtrage correspondantes, les étapes consistant à envoyer (708) un rapport de déconnexion de tunnel par la passerelle PDG au module d'authentification de service et/ou d'autorisation et à rafraîchir par le module d'authentification de service et/ou d'autorisation ses informations liées à la connexion par tunnel de service déconnectée après avoir reçu le rapport de déconnexion de tunnel.

20. Procédé selon la revendication 19, dans lequel la passerelle PDG libère ses ressources liées au tunnel de service avant d'envoyer le rapport de déconnexion de tunnel au module d'authentification de service et/ou d'autorisation, ou bien envoie le rapport de déconnexion de tunnel d'abord puis libère ses ressources liées au tunnel de service après avoir reçu un message d'accusé de réception du rapport de déconnexion de tunnel en provenance du module d'authentification de service et/ou d'autorisation, ou bien libère d'abord ses ressources liées au tunnel de service qui n'ont pas besoin d'être envoyées au module d'authentification de service et/ou d'autorisation puis libère les autres ressources liées au tunnel de service après réception d'un message d'accusé de réception du rapport de déconnexion de tunnel en provenance du module d'authentification de service et/ou d'autorisation.

21. Procédé selon la revendication 2, comprenant en outre, s'il est nécessaire de libérer les ressources liées au tunnel de service pour toutes les connexions par tunnel de service pour le présent abonné, l'étape consistant à supprimer par la passerelle PDG toutes les informations d'autorisation stockées correspondant au présent abonné lorsqu'elle libère ses ressources liées au tunnel de service pour les connexions par tunnel de service présentement déconnectées.

22. Procédé selon la revendication 21, comprenant en outre, si la connexion de base du présent abonné doit être déconnectée immédiatement, ou si l'abonné s'est trouvé hors ligne ou si l'abonné a été déconnecté complètement d'avec le module d'authentification de service et/ou d'autorisation pour les opérations de commande, ou doit l'être immédiatement, l'étape consistant à lancer par le module d'authentification de service et/ou d'autorisation une instruction à destination de la passerelle PDG pour qu'elle libère toutes les ressources liées au tunnel de service qui intéressent l'abonné.

23. Procédé selon la revendication 2, 3, 4, 5 ou 6, dans lequel les ressources liées au tunnel de service comprennent : l'identificateur de tunnel du tunnel de service déconnecté, la clef chiffrée pour la communication du tunnel de service déconnecté, les informations d'autorisation de service de l'abonné qui intéressent le tunnel de service déconnecté, les informations de commande et les informations d'état intéressant la maintenance du tunnel de service déconnecté, les informations d'abonnement de l'abonné intéressant la connexion par tunnel de service.

24. Procédé selon la revendication 1, 2, 3, 4, 5 ou 6, dans lequel le module d'authentification de service et/ou d'autorisation est un serveur d'authentification, d'autorisation, et de comptabilité 3GPP, AAA pour « *Authentication, Authrorization, Accounting* », ou un serveur AAA mandataire.
